## Europäisches Patentamt
## European Patent Office
## Office européen des brevets

(19)

(11) Numéro de publication: **0 237 387 B1**

(12)
# FASCICULE DE BREVET EUROPEEN

(45) Date de publication du fascicule du brevet:
04.04.90

(51) Int. Cl.⁴: **F02C 7/232**, F02C 9/26

(21) Numéro de dépôt: 87400301.5

(22) Date de dépôt: 11.02.87

(54) **Régulateur hydromécanique.**

(30) Priorité: 19.02.86 FR 8602221

(43) Date de publication de la demande:
16.09.87 Bulletin 87/38

(45) Mention de la délivrance du brevet:
04.04.90 Bulletin 90/14

(84) Etats contractants désignés:
DE FR GB

(56) Documents cités:
EP-A- 0 107 940
WO-A- 81/03682
CH-A- 328 858
FR-A- 1 595 739

(73) Titulaire: SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)

(72) Inventeur: D'Agostino, Guy, 1, rue Molière,
F-94400 Vitry(FR)
Inventeur: Dhainaut, André, 117 F, Avenue Colonel
Fabien, F-77190 Dammarie les Lys(FR)

(74) Mandataire: Moinat, François, S.N.E.C.M.A. Service des
Brevets Boîte Postale 81, F-91003 Evry Cédex(FR)

ACTORUM AG

## Description

La présente invention concerne un ensemble de régulation de turbomachines.

On sait que les régulateurs de carburant pour turbomachines comprennent généralement, un doseur de débit dont l'amont est relié à la sortie d'une pompe et l'aval à un circuit d'injection, une soupape régulatrice placée soit en dérivation entre la pompe et le doseur dans le cas d'une pompe volumétrique, soit en série entre la pompe et le doseur, ou entre le doseur et l'installation utilisatrice dans le cas d'une pompe centrifuge, un détecteur de perte de charge destiné à fournir une sortie à pression modulée Pmod fonction de la perte de charge Pam-Pav où Pam et Pav sont les pressions mesurées en amont et en aval du doseur, la sortie Pmod agissant sur la soupape régulatrice pour ouvrir ou fermer celle-ci quand la perte de charge varie, afin de rendre la perte de charge constante, un limiteur de survitesse apte à prendre en compte la vitesse de rotation de la turbomachine pour laquelle un seuil de survitesse est fixé de façon à diminuer le débit d'injection dans l'installation utilisatrice lorsque ce seuil est dépassé afin d'éviter un emballement éventuel de la turbomachine.

Les brevets FR 2.180.484, FR 2.180.485 et FR 2.180.509, tous trois au nom de la demanderesse, illustrent un mode de réalisation classique de ce genre de régulation dans lequel toutes les fonctions de la régulation sont réparties dans un bloo hydraulique volumineux.

Depuis l'époque du dépot de ces brevets, la tendance des constructeurs a été de réaliser des ensembles modulaires où chaque module remplit une ou deux fonctions de l'ensemble de la régulation. Cette construction modulaire permet d'une part de simplifier les opérations d'entretien, donc leur coût, et d'autre part de réaliser des modules miniaturisés, ce qui contribue à atteindre l'objectif de diminution du volume et du poids des moteurs et de leurs accessoires.

Ainsi les brevets FR 2 528 495 et FR 2 543 220, également au nom de la demanderesse, prévoient l'intégration de la soupape régulatrice à l'intérieur du doseur de débit pour réaliser un sous-ensemble modulaire remplissant ces deux fonctions.

Le brevet US 3 538 707 prévoit quant à lui la modularisation d'un doseur, d'une soupape régulatrice, d'un clapet de mise en pression et d'un clapet de surpression par alignement de ces dispositifs avec en plus l'intégration du clapet de surpression à l'intérieur du clapet de mise en pression.

On connaît par ailleurs par le document WO-A 8 103 682 la possibilité d'inclure dans un circuit de régulation un limiteur de survitesse et de surtempérature en série avec un doseur de débit de carburant. Mais dans ce dispositif, la valve de limitation de survitesse et de surtempérature agit en réponse à un signal d'erreur fourni électriquement par une électro-valve commandée par un circuit analogique.

Le document CH-A 328 528 décrit également un circuit de régulation dans lequel une soupape de survitesse, hydrauliquement en série avec le doseur de débit est liée mécaniquement à une soupape de sous-vitesse, hydrauliquement en parallèle avec le circuit comprenant le doseur de débit et le limiteur de survitesse.

La présente invention a pour but de réaliser un sousensemble intégrant la limitation de survitesse, avec une autre fonction de la régulation, à savoir la détection de la perte de charge en réalisant la combinaison de ces deux fonctions dans un même dispositif où une fourrure fixe du détecteur de perte de charge sert de logement au tiroir mobile du limiteur de survitesse afin d'obtenir une miniaturisation accrue du sous-ensemble modulaire.

L'invention a donc pour objet un ensemble de régulation de turbomachines, selon la revendication 1 comprenant un détecteur de perte de charge associé à un doseur de débit dont l'entrée est reliée au côté refoulement d'une pompe délivrant du carburant à une pression Pam et dont la sortie débite le carburant à une pression Pav vers un circuit d'injection, les variations des pressions Pam et Pav étant détectées par le détecteur de perte de charge, lequel, alimenté par un premier fluide de travail à pression PF, et un deuxième fluide de travail à pression PB plus basse, délivré en sortie un fluide à une pression de sortie Pmod, fonction de la perte de charge Pam-Pav, vers une soupape régulatrice qui agit en fonction de ladite pression de sortie Pmod sur le débit du carburant pour maintenir constante cette perte de charge.

Selon une particularité de l'invention, l'ensemble de régulation comprend un limiteur de survitesse qui détecte la vitesse de rotation de la turbomachine qui l'entraîne et diminue le débit de carburant délivré au circuit d'injection en réponse à un dépassement d'un seuil de vitesse prédéterminé, et le détecteur de perte de charge et le limiteur de survitesse sont intégrés dans un même sous-ensemble modulaire de régulation et sont alimentés en parallèle par le même premier fluide de travail à la même pression PF sous faible débit de telle sorte que le limiteur de survitesse diminue la pression dudit premier fluide de travail en le mettant en communication avec ladite pression PB plus basse lorsque le seuil prédéterminé est atteint, pour diminuer la pression Pmod en sortie du détecteur de perte de charge et réduire le débit de carburant délivré au circuit d'injection.

Le fluide de travail à pression PF actionnant en parallèle le détecteur de perte de charge et le limiteur de survitesse est de préférence constitué par du carburant prélevé à faible débit en aval de la pompe au travers d'un diaphragm tandis que la basse pression PB est constituée préférentiellement par un point quelconque du circuit de carburant entre le réservoir de carburant et l'amont de la pompe.

Dans la suite du texte, on utilisera le terme «la bâche» pour désigner cette partie basse pression du circuit de carburant.

Selon une caractéristique de l'invention, le détecteur de perte de charge est constitué par un fourreau cylindrique mobile en translation et en rotation entre un carter radialement externe et une fourrure radialement interne fixe délimitant deux chambres de commande respectivement l'une à la pression Pam

et l'autre à la presison Pav et deux chambres de travail, l'une à la pression PF et l'autre en communication avec la bâche à pression PB et apte par ses déplacements en translation à mettre en communicatio-nune ouverture de sortie, soit avec la première chambre de travail à pression PF, soit avec la seconde chambre de travail à pression PB pour réaliser la pression de sortie Pmod, en réponse à une diminution, respectivement une augmentation de la perte.de charge Pam-Pav.

Selon une autre caractéristique de l'invention, le limiteur de survitesse est constitué par un tiroir mobile en translation, à l'intérieur de la fourrure interne du détecteur de perte de charge, sous l'action de masselottes sensibles à la vitesse de rotation du système d'entraînement, la fourrure interne comporte deux ouvertures radiales débouchant respectivement dans chacune des chambres de travail du détecteur de perte de charge, etle tiroir comporte une chambre intermédiaire annulaire fermée par deux épaulements, l'un des épaulements du tiroir étant apte à fermer une des ouvertures radiales de la fourrure fixe tant que le seuil de survitesse n'est pas atteint et à dégager cette ouverture pour mettre en communication les deux chambres de travail du détecteur de perte de charge l'une avec l'autre au travers des ouvertures de la fourrure et de la chambre intermédiaire du tiroir dès que le seuil de survitesse est atteint.

Selon un mode de réalisation préféré de l'invention, le sous-ensemble de régulation comprend :

- un carter percé d'un alésage cylindrique dans lequel débouchent radialement cinq canalisations successivement selon l'axe longitudinal de l'alésage, la première recevant du carburant depuis l'amont du doseur à la pression Pam, la seconde recevant du carburant depuis l'aval du doseur à la pression Pav, la troisième étant en communication avec la bâche à pression PB, la quatrième délivrant vers la soupape régulatrice le fluide de travail à la pression Pmod et la cinquième recevant le fluide de travail à la pression PF ;

- un fourreau cylindrique mobile en translation et en rotation à l'intérieur du carter, comprenant un alésage cylindrique intérieur et cinq chambres annulaires externes en correspondance avec les canalisations du carter, chaque chambre comportant des ouvertures radiales de mise en communication avec l'alésage cylindrique intérieur ;

- une fourrure fixe comprenant un alésage interne et délimitant avec le fourreau mobile, d'une part deux chambres de commande séparées par un premier épaulement et communiquant respectivement avec la première et la deuxième canalisation du carter par l'intermédiaire des ouvertures radiales et des chambres annulaires du fourreau, d'autre part deux chambres de travail séparées par un second épaulement de la fourrure, communiquant respectivement avec la troisième et la cinquième canalisation du carter par les ouvertures et les chambres du fourreau, le second épaulement étant apte à masquer ou à dégager l'ouverture du fourreau communiquant avec la quatrième canalisation du carter en fonction des déplacements du fourreau, mobile sous l'action des pressions relatives Pam et Pav dans les deux chambres de commande, chaque chambre de travail de la fourrure comportant une ouverture radiale débouchant dans l'alésage interne de ladite fourrure ;

- un tiroir central mobile en translation dans l'alésage central de la fourrure fixe formant avec ladite fourrure une chambre intermédiaire limitée par deux épaulements du tiroir, ladite chambre intermédiaire étant reliée à la chambre de travail à pression PB par l'ouverture correspondante et un des épaulements étant apte à fermer l'ouverture vers la chambre de travail à pression PF et à l'ouvrir dès que le déplacement du tiroir traduit le dépassement du seuil de survitesse.

D'autres caractéristiques et des particularités du mode préféré de réalisation apparaîtront à la lecture de la description ci-dessous en regard des figures annexées, parmi lesquelles :

- la figure 1 montre le schéma d'organisation d'une régulation de carburant avec pompe volumétrique dans laquelle s'intègre le sous-ensemble selon l'invention
- la figure 2 illustre l'intégration du sous-ensemble à une régulation avec pompe centrifuge ;
- la figure 3 montre le sous-ensemble selon l'invention en coupe axiale ;
- la figure 4 est une vue en coupe selon AA de la figure 3 ;
- la figure 5 montre en coupe axiale le détail des positions respectives des divers organes du sous-ensemble selon l'invention, correspondant à une perte de charge stabilisée et à la vitesse nominale de rotation
- la figure 6 montre le même détail lors d'une augmentation de la perte de charge ;
- la figure 7 est une vue similaire de la précédente lors d'une diminution de la perte de charge ;
- la figure 8 est une vue similaire et montre le fonctionnement du limiteur de survitesse lorsque le seuil de survitesse est dépassé.

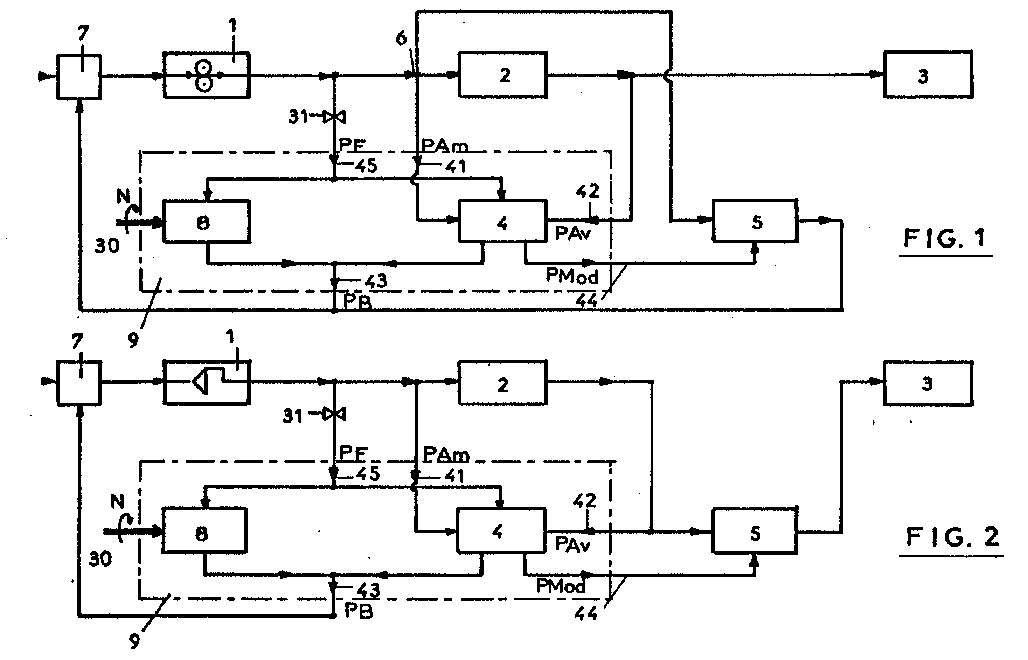

A la figure 1 est représenté le schéma d'une régulation de carburant de turbomachine avec pompe volumétrique. L'installation comporte une pompe volumétrique 1 qui débite un volume constant vers un doseur 2 qui alimente le circuit d'injection 3 constitué ici par les injecteurs d'une chambre de combustion de turbomachine. Un détecteur de perte de charge 4 reçoit sur deux tubulures d'entrée 41 et 42 les informations de pression Pam en amont du doseur 2 et Pav en aval du doseur et, sous l'action d'un fluide de travail à pression PF, fournit sur sa tubulure de sortie 44 une pression Pmod qui commande l'ouverture ou la fermeture d'une soupape 5 dont l'entrée est reliée à un point 6 situé entre la pompe 1 et le doseur 2, et la sortie à la bâche 7. Le rôle de la soupape de régulation 5 est, en réponse à la détection d'une variation de la perte de charge égale à la différence Pam-Pav, de dériver l'excédent de carburant qui se trouve entre la pompe 1 et le doseur 2 afin de maintenir constante la perte de charge dans le doseur, ce qui constitue une condition pour que le débit de carburant fourni aux injecteurs, lequel est proportionnel à la section de passage du doseur et à la racine carrée de la perte de charge, varie seulement avec les déplacements du piston doseur.

Un limiteur de survitesse 8 recevant pour information d'entrée la vitesse de rotation N de la turbomachine qui l'entraine est appelé à diminuer le débit dans le circuit d'injection 3, lorsqu'un seuil de survitesse est atteint afin de faire revenir le système à sa vitesse nominale, selon un mode de fonctionnement qui sera détaillé plus loin.

L'invention concerne le mode de réalisation du module référencé 9 combinant le détecteur de perte de charge 4 et le limiteur de survitesse 8 et leurs tubulures d'entrées et de sorties respectives de carburant.

A la figure 2, a été représenté le schéma d'une régulation de carburant d'une turbomachine avec pompe centrifuge, pour lequel les éléments identiques à ceux de la figure 1 portent les mêmes références.

Dans ce cas, la pompe 1 utilisée est du type centrifuge et délivre une pression à peu près indépendante du débit. Le maintien d'une perte de charge constante dans le doseur 2 s'obtient alors en disposant la soupape régulatrice en série avec le doseur de manière à créer un étranglement supplémentaire qui permet de jouer sur la pression amont ou aval du doseur pour rétablir, en réponse à une variation, la perte de charge à sa valeur prévue.

Le sous-ensemble modulaire 9 selon l'invention s'intègre à cette disposition de la même façon que précédemment.

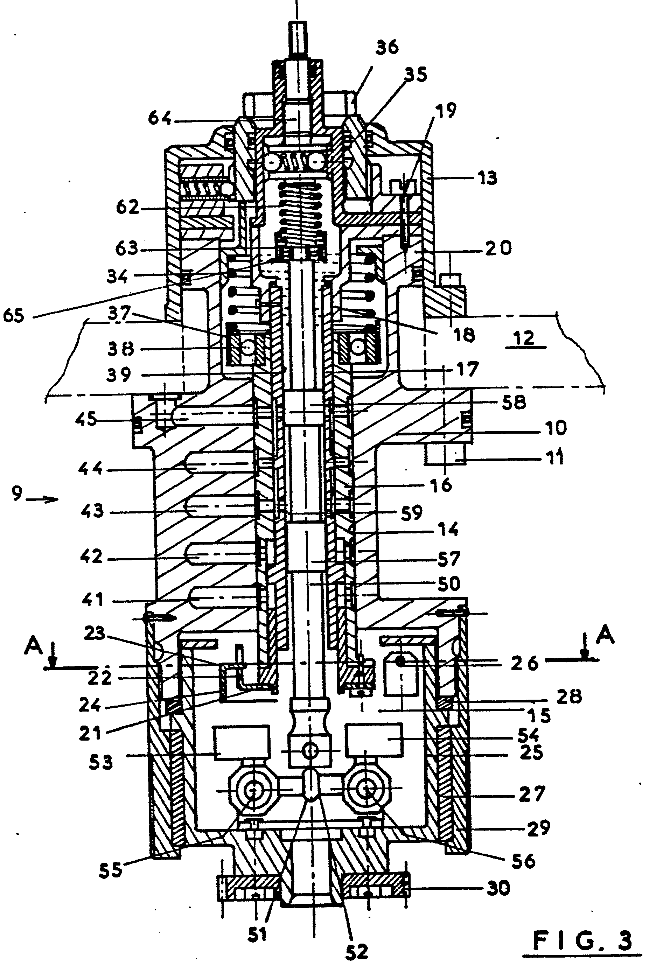

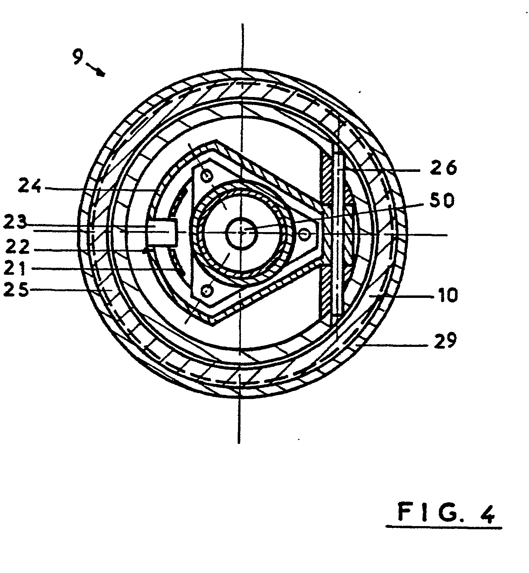

Si l'on se réfère maintenant aux figures 3 et 4 qui montrent le sous-ensemble 9, on voit que celui-ci comporte un carter extérieur 10 fixé par des vis 11 sur la structure 12 du régulateur auquel il est associé. Le carter 10 est fermé à l'extérieur de la structure 12 par un chapeau 13 renfermant les moyens de réglage de la perte de charge et du seuil de survitesse ainsi que cela apparaîtra plus loin.

Le carter 10 comporte un alésage cylindrique 14 débouchant à sa partie basse dans une cavité cylindrique 15 contenant les moyens d'entraînement du détecteur de perte de charge et du tiroir du limiteur de survitesse.

Dans l'alésage 14 se trouve un fourreau mobile tubulaire 16 entre le carter et une fourrure fixe 17 solidaire à sa partie haute d'un manchon 18 vissé en 19 sur une portée cylindrique supérieure 20 du carter 10.

Le fourreau mobile est solidaire à sa partie basse d'une coupelle 21 possédant une encoche oblongue 22 dans laquelle pénètre l'ergot 23 d'un secteur 24 monté tournant sur un cylindre 25 au moyen d'un axe 26. Le cylindre 25 est lui-même tournant autour de l'axe central de l'alésage 14 sur des paliers carbone 27, 28 disposés à l'intérieur de la bague filetée 29 fermant la cavité inférieure 15, le cylindre 25 étant entrainé en rotation par une roue dentée 30 engrenant avec un système d'entrainement non représenté sur la figure.

Le carter 10 comprend (voir figures 3 et 5 à 8) cinq canalisations débouchant dans l'alésage 14, les canalisations étant reliées, lorsque le sous-ensemble est monté sur l'ensemble de régulation :

- la première 41 à l'amont du doseur, à la pression Pam ;
- la seconde 42 à l'aval du doseur, à la pression Pav ;
- la troisième 43 à la bâche 7 à la pression PB ;
- la quatrième 44 fournit ainsi qu'on va le voir du carburant à une pression Pmod à l'entrée de commande de la soupape régulatrice 5 ;
- la cinquième 45 est reliée à une source de fluide de travail à pression PF, cette source pouvant de façon simple être une prise de carburant sur le circuit de régulation entre la pompe 1 et le doseur 2, diaphragmée en 31 afin d'en diminuer le débit dans la canalisation 45, comme représenté sur les figures 1 et 2.

Le fourreau mobile 16 comporte cinq chambres annulaires externes 161 à 165 en correspondance avec les cinq canalisations 41 à 45, et dans chaque chambre, des ouvertures radiales 261 à 265 débouchant dans l'alésage interne du fourreau, contenant la fourrure fixe 17.

Celle-ci comporte elle-même deux chambres annulaires externes de commande, séparées par un épaulement 32 de la fourrure, l'une 171 et l'autre 172 étant en communication constante respectivement avec l'entrée 41 à pression Pam et 42 à pression Pav.

La fourrure 17 comporte également deux chambres de travail annulaires externes 173 et 174 séparées par un second épaulement 33, ces chambres étant en communication constante respectivement avec la bâche 7 par la canalisation 43 à pression PB et avec l'entrée 45 à la pression PF. L'épaulement 33 peut masquer ou démasquer l'ouverture radiale 264 qui communique avec la sortie 44.

Le carter 10, le fourreau mobile 16 et la fourrure fixe 17 forment le détecteur de perte de charge, le fourreau 16 se déplaçant en translation sous l'action de la pression différentielle Pam-Pav dans les chambres 171 et 172 et fournissant la pression modulée Pmod à la sortie 44 au moyen du mélange des fluides à pression PF et PB lors des oscillations de l'épaulement 33 autour de sa position moyenne face à l'ouverture 264.

Le réglage de la perte de charge est effectué au moyen d'une butée élastique comportant un ressort 34 comprimé entre un dispositif de réglage à vis 35 et à crans 36 et une bague 37 solidaire de la bague externe d'un roulement 38 dont la bague interne est montée serrée sur l'extrémité supérieure du fourreau 16.

Le limiteur de survitesse 8 comporte un tiroir 50 mobile en translation à l'intérieur d'un alésage 39 de la fourrure 17. Le tiroir 50 est actionné en translation par deux galets 51, 52 solidaires de deux masselottes 53, 54 articulées sur deux axes 55, 56 portés par une pièce solidaire du cylindre 25.

Le tiroir 50 comporte deux épaulements 57, 58 délimitant avec la fourrure fixe 17 une chambre intermédiaire 59 en communication constante avec la pression PB de la bâche 7 par une ouverture 60 de la fourrure 17 débouchant dans la chambre 173. L'épaulement 58, quant à lui, masque aux vitesses normales de rotation du système d'entraînement une ouverture 61 de la fourrure 17, débouchant dans la chambre 174 à la pression PF.

Le seuil de survitesse est prédéterminé par une butée élastique réglable à l'encontre de laquelle se déplace le tiroir 50 sous l'action des masselottes 53, 54.

Cette butée est constituée par un ressort 62 comprimé entre une coupelle 63 (contre laquelle s'appuie au moyen d'un roulement 65 l'extrémité supérieure du tiroir 50) et une vis de réglage 64.

Le fonctionnement de l'ensemble combinant le détecteur de perte de charge et le limiteur de survitesse est le suivant.

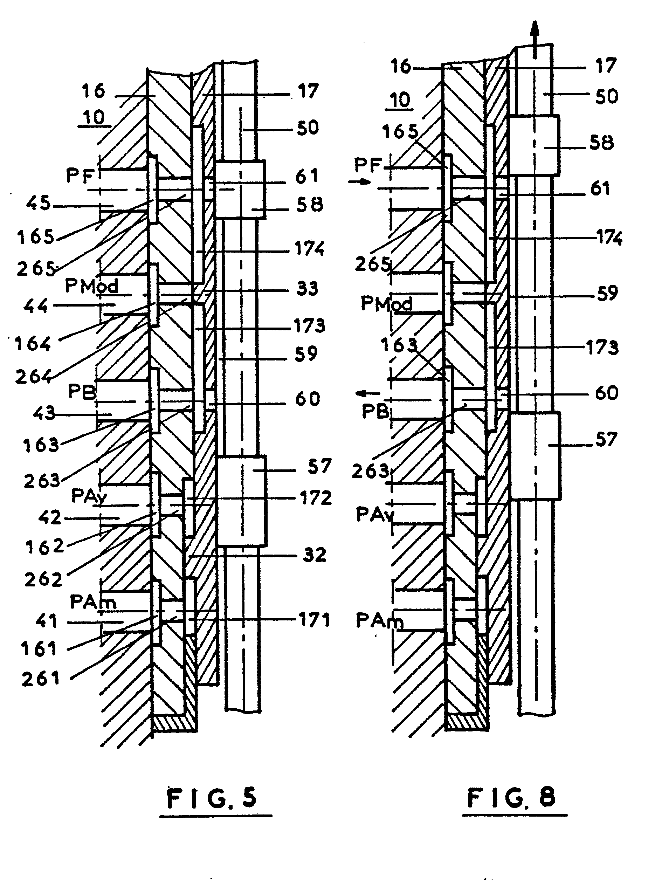

Lorsque la pompe 1 est du type volumétrique, cas de la figure 1, la soupape régulatrice 5 doit s'ouvrir lorsque la perte de charge Pam-Pav augmente, afin de dériver une partie du débit de carburant délivré par la pompe 1 et de rétablir la perte de charge à sa valeur nominale en diminuant Pam.
La description suivante est faite dans ce cas. Aux vitesses normales de rotation du système d'entrainement et pour la perte de charge nominale, le fourreau mobile se trouve dans la configuration de la figure 5 et l'épaulement 58 du tiroir 50 masque l'ouverture 61 de la fourrure.

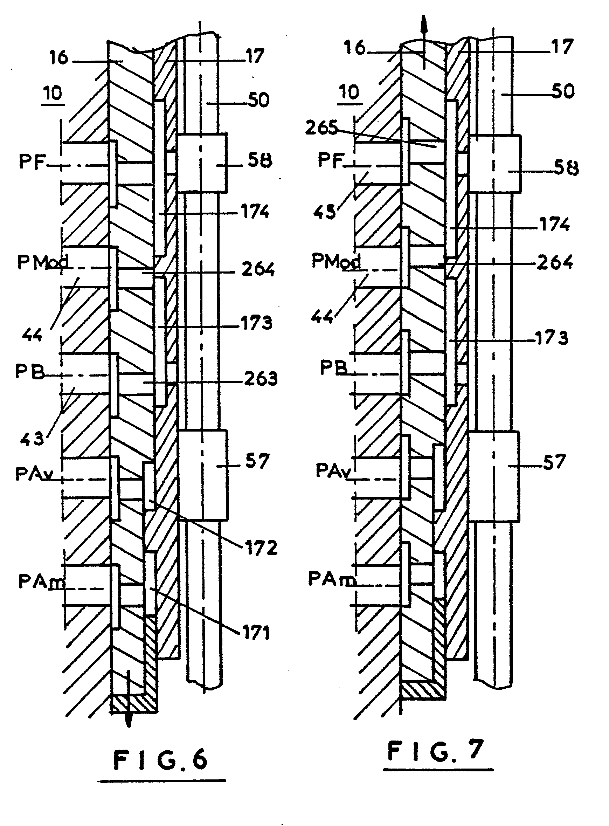

Lorsque la pression Pam en amont du doseur 2 augmente (figure 6), la perte de charge Pam-Pav augmente ; la surpression de la chambre 171 tend à déplacer le fourreau mobile 16 vers le bas sur la figure, démasquant ainsi l'ouverture 264 et mettant en communication la sortie 44 avec la bâche par l'intermédiaire de la chambre 173. La pression Pmod étant ainsi diminuée ouvre la soupape régulatrice 5, ce qui a pour effet de décharger la pression Pam.

A l'inverse (figure 7), si c'est la pression Pav en aval du doseur qui augmente, le fourreau 16 sera repoussé vers le haut sur la figure et la sortie 44 sera mise en communication avec la chambre 174 à la pression PF, ce qui aura pour effet de fermer la soupape 5 et conduira à une augmentation de la pression amont Pam rétablissant ainsi la perte de charge initiale Pam-Pav.

Lorsque la perte de charge est sensiblement constante mais que le seuil de survitesse est dépassé, on se trouve dans la configuration de la figure 8. Le tiroir 50 est poussé par les galets 51, 52 vers le haut et l'épaulement 58 démasque l'ouverture 61 de la fourrure fixe mettant ainsi en communication les chambres 163 et 165 par l'intermédiaire des chambres de travail 173, 174 des ouvertures 60 et 61 et de la chambre intermédiaire 59. La pression de travail PF est ainsi déchargée vers la bâche 7 ce qui a pour effet de diminuer la pression de sortie Pmod du détecteur de perte de charge et par là même d'ouvrir rapidement la soupape régulatrice 5 et donc de réduire le débit dans l'installation réceptrice 3, faisant ainsi diminuer le régime. La vitesse de rotation revient alors à ses valeurs normales.
Mais, lorsque la pompe 1 est du type centrifuge, cas de la figure 2, au contraire, la soupape régulatrice 5 doit se fermer lorsque la perte de charge Pam-Pav augmente, afin d'étrangler davantage le débit de carburant traversant le doseur 2 et de rétablir la perte de charge à sa valeur nominale soit en diminuant Pam soit en augmentant Pav selon que la soupape régulatrice 5 est placée en amont ou en aval du doseur 2.

Dans ce cas, le dispositif décrit ci-dessus fonctionne de la même façon mais le sens de commande de la soupape régulatrice est inversé de telle sorte qu'une diminution de Pmod entraine une fermeture de la soupae régulatrice et une augmentation de Pmod entraine une ouverture de la soupape régulatrice.

Le dispositif selon l'invention permet donc par l'intégration du limiteur de survitesse à l'intérieur du détecteur de perte de charge, d'obtenir un effet d'amplification de la commande de réduction de la survitesse en agissant directement sur l'alimentation hydraulique du détecteur de perte de charge. Cette amplification de la commande autorise un détecteur de faible volume et donne, de surcroît, la rapidité d'exécution nécessaire à un dispositif de sécurité de ce type.

En outre l'intégration du tiroir du limiteur dans la fourrure du détecteur de perte de charge est d'autant plus intéressante pour la miniaturisation du module que le limiteur de survitesse utilise les mêmes pressions de travail PF et PB que le détecteur de perte de charge.

## Revendications

1. Ensemble de régulation de turbomachines comprenant un détecteur de perte de charge associé à un doseur de débit (2) dont l'entrée est reliée au côté refoulement d'une pompe (1) délivrant du carburant à une pression Pam et dont la sortie débite le carburant à une pression Pav vers un circuit d'injection (3), les variations des pressions Pam et Pav étant détectées par le détecteur de perte de charge (4), lequel, alimenté par un premier fluide de travail à pression PF et un deuxième fluide de travail à pression PB plus basse, délivre en sortie un fluide à une pression de sortie Pmod, fonction de la perte de charge Pam-Pav, vers une soupape régulatrice qui agit en fonction de ladite pression de sortie Pmod sur le débit du carburant pour maintenir constante cette perte de charge, caractérisé en ce que l'ensemble de régulation comprend un limiteur de survitesse (8) qui détecte la vitesse de rotation de la turbomachine qui l'entraine et diminue le débit de carburant délivré au circuit d'injection (3) en réponse à un dépassement d'un seuil de vitesse prédéterminé, et en ce que le détecteur de perte de charge et le limiteur de survitesse sont intégrés dans un même sousensemble modulaire de régulation et sont alimentés en parallèle par le même premier fluide de travail à la même pression PF sous faible débit et en ce que le limiteur de survitesse (8) diminue la pression dudit premier fluide de travail en le mettant en communication avec ladite pression PB plus basse lorsque le seuil prédéterminé est atteint, pour diminuer la pression Pmod en sortie du détecteur de perte de charge (4) et réduire le débit de carburant délivré au circuit d'injection (3).

2. Ensemble de régulation selon la revendication 1, caractérisé en ce que le fluide de travail à pression PF actionnant en parallèle le détecteur de perte de charge (4) et le limiteur de survitesse (8) est constitué par du carburant prélevé à faible débit en aval de la pompe (1) au travers d'un diaphragme (31), et en ce que la basse pression PB est constituée par un point quelconque (7) du circuit de carburant entre le réservoir de carburant et l'amont de la pompe (1) qui sera appelé «la bâche».

3. Ensemble de régulation selon la revendication 2, caractérisé en ce que le détecteur de perte de charge (4) est constitué par un fourreau cylindrique (16) mobile en translation et en rotation entre un carter radialement externe (10) et une fourrure radialement interne fixe (17) délimitant deux chambres de commande respectivement l'une (161) à la pression Pam et l'autre (162) à la pression Pav et deux chambres de travail, l'une (174) à la pression PF et l'autre (173) en commmunication avec la bâche à pression PB et apte par ses déplacements en translation à mettre en communication une ouverture de sortie (44, 164, 264) soit avec la première chambre de travail (174) à pression PF, soit avec la seconde chambre de travail (173) à pression PB pour réaliser la pression de sortie Pmod, en réponse à une diminution, respectivement une augmentation de la perte de charge Pam-Pav.

4. Ensemble de régulation selon la revendication 3, caractérisé en ce que le limiteur de survitesse (8) est constitué par un tiroir (50) mobile en translation, à l'intérieur de la fourrure interne (17) du détecteur de perte de charge, sous l'action de masselottes (53, 54) sensibles à la vitesse de rotation du système d'entraînement (30), en ce que la fourrure interne (17) comporte deux ouvertures radiales (60, 61) débouchant respectivement dans chacune des chambres de travail (173, 174) du détecteur de perte de charge, en ce que le tiroir (50) comporte une chambre intermédiaire annulaire (59) fermée par deux épaulements (57, 58), l'un (58) des épaulements du tiroir étant apte à fermer l'une (61) des ouvertures radiales de la fourrure fixe (17) tant que le seuil de survitesse n'est pas atteint et à dégager cette ouverture pour mettre en communication les deux chambres de travail (173, 174) du détecteur de perte de charge l'une avec l'autre au travers des ouvertures (60, 61) de la fourrure et de la chambre intermédiaire (59) du tiroir dès que le seuil de survitesse est atteint.

5. Ensemble de régulation selon l'une quelconque des revendications 1 à 4, caractérisé en ce qu'il comprend:
– un carter (10) percé d'un alésage cylindrique (14) dans lequel débouchent radialement cinq canalisations successivement selon l'axe longitudinal de l'alésage, la première (41) recevant du carburant depuis l'amont du doseur à la pression Pam, la seconde (42) recevant du carburant depuis l'aval du doseur à la pression Pav, la troisième (43) étant en communication avec la bâche à pression PB, la quatrième (44) délivrant vers la soupape régulatrice le fluide de travail à la pression Pmod et la cinquième (45) recevant le fluide de travail à la pression PF;
– un fourreau cylindrique (16) mobile en translation et en rotation à l'intérieur du carter (10), comprenant un alésage cylindrique intérieur et cinq chambres annulaires externes (161 à 165) en correspondance avec les canalisations (41 à 45) du carter (10), chaque chambre comportant des ouvertures radiales (261 à 265) de mise en communication avec l'alésage cylindrique intérieur ;
– une fourrure fixe (17) comprenant un alésage interne et délimitant avec le fourreau mobile d'une part deux chambres de commande (171, 172) séparées par un premier épaulement (32) et communiquant respectivement avec la première et la deuxième canalisation (41, 42) du carter par l'intermédiaire des ouvertures radiales et des chambres annulaires (resp. 261, 161; 262, 162), du fourreau, d'autre part deux chambres de travail (173, 174) séparées par un second épaulement (33) de la fourrure, communiquant respectivement avec la troisième et la cinquième canalisation (43, 45) du carter par les ouvertures et les chambres (resp. 263, 163; 265, 165) du fourreau, le second épaulement (33) étant apte à masquer ou à dégager l'ouverture (264) du fourreau communiquant avec la quatrième canalisation (44) du carter en fonction des déplacements du fourreau mobile sous l'action des pressions relatives Pam et Pav des deux chambres de commande ; chaque chambre de travail (173, 174) de la fourrure comportant une ouverture radiale (60, 61) débouchant dans l'alésage interne de ladite fourrure;
– un tiroir central (50), mobile en translation dans l'alésage central de la fourrure fixe, formant avec ladite fourrure une chambre intermédiaire (59) limitée par deux épaulements (57, 58) du tiroir, ladite chambre intermédiaire étant reliée à la chambre de travail (173) à pression PB par l'ouverture correspondante (60) et un des épaulements (58) étant apte à fermer l'ouverture (61) vers la chambre de travail (174) à pression PF et à l'ouvrir dès que le déplacement du tiroir traduit le dépassement du seuil de survitesse.

6. Ensemble de régulation selon la revendication 5, caractérisé en ce que le fourreau (16) est mobile à l'encontre d'une butée élastique à ressort (34) à contrainte réglable par une vis (35).

7. Ensemble de régulation selon l'une des revendications 5 ou 6, caractérisé en ce que le fourreau (16) est entraîné en rotation par le système d'entraînement (30) au moyen d'un cylindre (25) monté rotatif à l'intérieur d'une bague (29) solidaire du carter (10) et transmettant la rotation du système d'entraînement au fourreau au moyen d'un secteur (24) portant un ergot (23) coopérant avec une encoche (22) d'une coupelle (21) solidaire du fourreau.

8. Ensemble de régulation selon la revendication 7, caractérisé en ce que l'encoche (22) de la coupelle est oblongue pour autoriser les déplacements axiaux du fourreau dans l'alésage interne du carter.

9. Ensemble de régulation selon l'une des revendications 7 ou 8, caractérisé en ce que le tiroir (50) du limiteur de survitesse est entraîné en translation par des galets (51, 52) s'appuyant sur l'extrémité du tiroir et solidaires de masselottes (53, 54) articulées sur des axes (55, 56) portés par une pièce solidaire de la base du cylindre rotatif (25).

10. Ensemble de régulation selon l'une quelconque des 5 revendications 5 à 9, caractérisé en ce que le tiroir (50) du limiteur de survitesse (8) est mobile en translation à l'encontre d'une butée élastique à ressort (62) à contrainte réglable par une vis réalisant le seuil de survitesse prédéterminé.

## Patentansprüche

1. Reglereinheit für Turbomaschinen mit einem Druckverlustdetektor (4), der einem Durchflußdosierer (2) zugeordnet ist, dessen Eingang mit der Ausflußseite einer Pumpe (1) verbunden ist, die Kraftstoff mit einem Druck Pam liefert, und dessen Ausgang den Kraftstoff mit einem Druck Pav an einen Einspritzkreis (3) liefert, wobei Änderungen der Drücke Pam und Pav von dem Druckverlustdetektor (4) erfaßt werden, der von einem ersten Arbeitsfluid mit dem Druck PF und einem zweiten Arbeitsfluid mit dem niedrigeren Druck PB gespeist wird, an seinem Ausgang ein Fluid mit dem Ausgangsdruck Pmod, der eine Funktion des Druckverlusts Pam - Pav ist, an ein Regelventil liefert, das in Abhängigkeit von dem genannten Ausgangsdruck Pmod auf die Kraftstoffdurchflußmenge einwirkt, um den Druckverlust konstant zu halten, dadurch gekennzeichnet, daß die Reglereinheit einen Drehzahlbegrenzer (8) umfaßt, der die Drehzahl der ihn antreibenden Turbomaschine erfaßt und die an den Einspritzkreis (3) abgegebene Kraftstoffmenge in Abhängigkeit vom Überschreiten eines vorbestimmten Drehzahlschwellenwerts verringert, daß der Druckverlustdetektor (4) und der Drehzahlbegrenzer (8) in ein und derselben modularen Reglerunterheit integriert sind und parallel von demselben ersten Arbeitsfluid mit demselben Druck PF mit schwachem Durchsatz gespeist werden und daß der Drehzahlbegrenzer (8) den Druck des ersten Arbeitsfluids verringert, indem er es mit dem niedrigeren Druck PB verbindet, wenn der vorbestimmte Schwellenwert erreicht ist, um auf diese Weise den Druck Pmod am Ausgang des Druckverlustdetektors (4) zu verringern und die an den Einspritzkreis (3) gelieferte Kraftstoffmenge zu reduzieren.

2. Reglereinheit nach Anspruch 1, dadurch gekennzeichnet, daß das Arbeitsfluid mit dem Druck PF, das parallel auf den Druckverlustdetektor (4) und den Drehzahlbegrenzer (8) einwirkt, Kraftstoff ist, der mit geringem Durchsatz stromabwärts der Pumpe (1) über eine Drosselstelle (31) entnommen wird, und daß die Seite mit dem niedrigeren Druck PB von einem beliebigen zwischen dem Kraftstofftank und der stromaufwärtigen Seite der Pumpe (1) liegenden Punkt (7) des Kraftstoffkreises gebildet ist, der einen Sammelbehälter darstellt.

3. Reglereinheit nach Anspruch 2, dadurch gekennzeichnet, daß der Druckverlustdetektor (4) von einer zylindrischen Hülse (16) gebildet ist, die zwischen einem radial äußeren Gehäuse (10) und einer radial inneren feststehenden Büchse (17) verschiebbar und drehbar ist und die zwei Steuerkammern (161, 162) und zwei Arbeitskammern (174, 173) begrenzt, wobei in der einen Steuerkammer (161) der Druck Pam und in der anderen Steuerkammer (162) der Druck Pav herrscht und wobei in der einen Arbeitskammer (174) der Druck PV herrscht und die andere Arbeitskammer (173) mit dem Sammelbehälter mit dem Druck PB in Verbindung steht, und daß die zylindrische Hülse (16) durch ihre Translationsbewegung eine Ausgangsöffnung (44, 164, 264) sowohl mit der ersten Arbeitskammer (173) mit dem Druck PF als auch mit der zweiten Arbeitskammer (173) mit dem Druck PB in Verbindung setzen kann, um den Ausgangsdruck Pmod in Abhängigkeit von einer Verringerung bzw. einer Erhöhung des Druckverlusts Pam-Pav einzustellen.

4. Reglereinheit nach Anspruch 3, dadurch gekennzeichnet, daß der Drehzahlbegrenzer (8) von einem Schieber (50) gebildet ist, der im Innern der inneren Büchse (17) des Druckverlustdetektors unter der Wirkung von auf die Drehzahl des Antriebssystems (30) ansprechenden Fliehgewichten (53, 54) eine Translationsbewegung ausführen kann, daß die innere Büchse (17) zwei radiale Öffnungen (60, 61) besitzt, die jeweils in einer der beiden Arbeitskammern (173, 174) des Druckverlustdetektors münden, daß der Schieber (50) eine ringförmige Zwischenkammer (59) aufweist, die von zwei Schultern (57, 58) verschlossen ist, von denen die eine (58) die eine (61) der radialen Öffnungen der festen Büchse (17) verschließen kann, solange der Drehzahlschwellenwert nicht erreicht ist, und diese Öffnung freigeben kann, um die beiden Arbeitskammern (73, 74) des Druckverlustdetektors über Öffnungen (60, 61) der Büchse (17) und die Zwischenkammer (59) des Schiebers miteinander zu setzen, sobald der Drehzahlschwellenwert erreicht ist.

5. Reglereinheit nach einem der Ansprüche 1 bis 4, gekennzeichnet durch
- ein Gehäuse (10), das von einer zylindrischen Bohrung (14) durchdrungen ist, in der aufeinanderfolgend fünf Kanäle in Richtung der Längsachse der Bohrung radial münden, von denen der erste (41) Kraftstoff von der stromaufwärtigen Seite des Dosierers mit dem Druck Pam aufnimmt, der zweite (42) Kraftstoff von der stromabwärtigen Seite des Dosierers mit dem Druck Pav aufnimmt, der dritte (43) mit dem Sammelbehälter mit dem Druck PB in Verbindung steht, der vierte (44) das Arbeitsfluid mit dem Druck Pmod an das Regelventil liefert und der fünfte (45) das Arbeitsfluid mit dem Druck PF aufnimmt,
- eine im Innern des Gehäuses (10) verschiebbar und drehbar angeordnete zylindrische Hülse (16) mit einer zylindrischen Innenbohrung und fünf ringförmigen äußeren Kammern (161 bis 165), deren Positionen mit denen der Kanäle (41b bis 45) des Gehäuses (10) korrespondieren, wobei jede Kammer radiale Öffnungen (261 bis 265) aufweist, über die sie mit der zylindrischen Innenbohrung verbindbar ist,
- eine feststehende Büchse (17), die eine Innenbohrung aufweist und zusammen mit der beweglichen Hülse (16) einerseits zwei Steuerkammern (171, 172) begrenzt, die durch eine erste Schulter (32) getrennt sind und mit dem ersten bzw. dem zweiten Kanal des Gehäuses über radiale Öffnungen und die ringförmigen Kammern (261 bzw. 161; 262 bzw. 162) in Verbindung stehen, und andererseits zwei Arbeitskammern (173, 174), die durch eine zweite Schulter (33) der Büchse (17) getrennt sind und mit dem dritten bzw. fünften Kanal (43, 45) des Gehäuses durch Öffnungen und die Kammern (263 bzw. 163; 265 bzw. 165) der Hülse (16) in Verbindung stehen, wobei die zweite Schulter in Abhängigkeit von Verschiebungen der beweglichen Hülse (16) unter der Einwirkung der relativen Drücke Pam und Pav in den beiden Steuerkammern die Öffnung (264) der Hülse (16), die mit dem vierten Kanal des Gehäuses in Verbindung steht, abdecken oder freigeben kann, wobei jede Arbeitskammer (173, 174) der Büchse (17) eine radiale Öffnung (60, 61) besitzt, die in der inneren Bohrung der Büchse (17) mündet,
– und einen zentralen Schieber (50), der in der zentralen Bohrung der festen Büchse (17) in Translationsrichtung verschiebbar ist und zusammen mit der Büchse (17) eine von zwei Schultern (57, 58) des Schiebers begrenzte Zwischenkammer (59) bildet, die über die betreffende Öffnung (60) der Büchse (17) mit der Arbeitskammer (173) mit dem Druck PB verbunden ist, wobei eine (58) der Schultern die Öffnung (61) zu der Arbeitskammer (74) mit dem Druck PF verschließen kann und diese freigeben kann, sobald die Bewegung des Schiebers das Überschreiten des Drehzahlschwellenwerts anzeigt.

6. Reglereinheit nach Anspruch 5, dadurch gekennzeichnet, daß die Hülse (16) gegen einen federelastischen Anschlag (34) bewegbar ist, dessen Kraft durch eine Schraube (35) regelbar ist.

7. Reglereinheit nach einem der Ansprüche 5 oder 6, dadurch gekennzeichnet, daß die Hülse (16) von dem Antriebssystem (30) über einen Zylinder (25) gedreht wird, der im Innern eines mit dem Gehäuse (10) fest verbundenen Rings (29) drehbar montiert ist und die Drehbewegung des Antriebssystems über einen Sektor (24) auf die Hülse (16) überträgt, der einen Zapfen (23) trägt, der mit einer Kerbe (22) in einer mit der Hülse (16) festverbundenen Kappe (21) zusammenwirkt.

8. Reglereinheit nach Anspruch 7, dadurch gekennzeichnet, daß die Kerbe (22) der Kappe länglich ausgebildet ist, um axiale Bewegungen der Hülse (16) in der inneren Bohrung des Gehäuses (10) zu ermöglichen.

9. Reglereinheit nach einem der Ansprüche 7 oder 8, dadurch gekennzeichnet, daß der Schieber (50) des Drehzahlbegrenzers durch Rollen (51, 52) in Translationsrichtung antreibbar ist, die sich gegen den Endbereich des Schiebers abstützen und mit Fliehgewichten (53, 54) fest verbunden sind, die auf Achsen (55, 56) drehbar sind, die von einem der Basis des drehbaren Zylinders (25) fest verbundenen Teil getragen werden.

10. Reglereinheit nach einem der Ansprüche 5 bis 9, dadurch gekennzeichnet, daß der Schieber (50) des Drehzahlbegrenzers (a) gegen die Wirkung eines federelastischen Anschlags (62) in Translationsrichtung bewegbar ist, wobei die Kraft des federelastischen Anschlags durch eine Schraube zur Einstellung des vorbestimmten Drehzahlschwellenwerts regelbar ist.

**Claims**

1. Fuel control system for gas turbine engines comprising a pressure drop sensor associated with a flowmeter (2) whose input is connected to the return side of a pump (1) delivering fuel at a pressure Pam and whose outlet supplies the fuel at a pressure Pav to an injection circuit (3), the variations in pressure of Pam and Pav being detected by the pressure drop sensor (4) which, supplied by a first working fluid at a pressure PF and a second working fluid at a lower pressure PB, delivers at its outlet a fluid at an output pressure Pmod, a function of the pressure drop Pam - Pav, to a regulating valve which, in accordance with the said output pressure Pmod, acts on the fuel output to maintain the pressure drop at a constant level, characterised in that the regulation system comprises an overspeed limiter (8) which detects the speed of rotation of the gas turbine that drives it and reduces the output of fuel delivered to the injection system (3) in response to a predetermined speed threshold being exceeded, and in that the pressure drop sensor and the overspeed limiter are integrated into the same modular regulator sub-assembly and are supplied with the same first working fluid at the same pressure PF at a low flow rate and in that the overspeed limiter (8) reduces the pressure of the said first working fluid by putting it into communication with the said lower pressure PB when the predetermined threshold is reached, so as to reduce the pressure Pmod at the outlet of the pressure drop sensor (4) and reduces the output of fuel delivered to the injection circuit (3).

2. Fuel control assembly in accordance with claim 1, characterised in that the working fluid at pressure PF which acts in parallel on the pressure drop sensor (4) and the overspeed limiter (8) is constituted by fuel drawn off at a low flow rate from the outlet side of the pump (1) through a diaphragm (31), and in that the low pressure PB is constituted by any given point (7) in the fuel circuit between the fuel tanks and the inlet of the pump (1) which shall be called «the tank».

3. Fuel control assembly in accordance with claim 2, characterised in that the pressure drop sensor (4) is constituted by a cylindrical sleeve (16) movable both in longitudinal movement and in rotation between a radially outer casing (10) and a radially inner fixed lining delimiting two control chambers respectively one (161 ) at pressure Pam and the other (162) at pressure Pav, and two working chambers, one (174) at pressure PF and the other (173) in communication with the tank at pressure PB and able, by means of its longitudinal movement, in response to a reduction or an increase in the pressure drop Pam-Pav, to put an outlet orifice (44, 164, 264) in communication with either the first working chamber (174) at pressure PF, or the second working chamber (173) at working pressure PB, to achieve the outlet pressure Pmod.

4. Fuel control assembly in accordance with claim 3, characterised in that the overspeed limiter (8) is constituted by a slide (50) able to move back and forth inside the inner lining (17) of the pressure drop sensor under the influence of the bob weights (53, 54) which are sensitive to the speed of rotation of the drive system (30), and in that the inner lining (17) comprises two radial orifices (60, 61) opening respectively into each of the two working chambers (173, 174) of the pressure drop sensor, and in that the slide (50) comprises an annular intermediate chamber (59) closed by two collars (57, 58), one of the slide collars (58) being capable of closing one (61) of the radial orifices of the fixed lining (17) so long as the overspeed threshold has not been reached and to clear this orifice to put the two chambers (173, 174) of the pressure drop sensor in communication with each other through the orifices (60, 61) in the inner lining and the intermediate chamber (59) of the slide as soon as the speed threshold is reached.

5. Fuel control assembly in accordance with any of the claims 1 to 4, characterised in that it comprises:
– a casing (10) with a cylindrical bore (14) into which open radially and successively five pipes along the longitudinal axis of the bore, the first (41) receiving fuel at pressure Pam from upstream of the flowmeter, the second (42) receiving fuel at pressure Pav from downstream of the flowmeter, the third, (43) communicating with the tank at pressure PB, the fourth (44) delivering to the control valve the working fluid at pressure Pmod and the fifth (45) receiving the working fluid at pressure PF;
– a cylindrical sleeve (16) movable in longitudinal movement and in rotation inside the casing (10), comprising a cylindrical bore and five external annular chambers (161 to 165) communicating with the pipes (41 to 45) of the casing (10), each chamber comprising radial orifices (261 to 265) for communicating with the inner cylindrical bore;
– a fixed lining (17) comprising an inner bore and defining with the movable sleeve on the one hand two control chambers (171, 172) separated by a first collar (32) and communicating respectively with the first and the second pipes (41, 42) of the casing by means of the radial orifices and the annular chambers (respectively 261, 161; 262, 162) of the sleeve, and on the other hand two working chambers (173, 174) separated by a second collar (33) of the lining, communicating respectively with the third and the fifth pipes (43, 45) of the casing through the orifices and the chambers (respectively 263, 163 ; 265, 165) of the sleeve, the second collar being capable of closing off or opening the orifice (264) in the sleeve communicating with the fourth pipe (44) of the casing, as a function of the movements of the movable sleeve under the effect of the relative pressures Pam and Pave in the two control chambers: each working chamber (173, 174) of the lining comprising a radial orifice (60, 61) opening into the internal bore of the said lining;
– a central slide (50), movable in a longitudinal direction in the central bore of the fixed lining, forming with the said lining an intermediate chamber (59) defined by the two collars (57, 58) of the slide, the said intermediate chamber being connected to the working chamber (173) at pressure PB by the corresponding orifice (60) and one of the collars (58) being capable of closing off the orifice (61) into the working chamber (174) at pressure PF and of opening it as soon as the movement of the slide reflects the surpassing of the speed threshold.

6. Fuel control assembly in accordance with claim 5, characterised in that the sleeve (16) is movable longitudinally until it encounters a spring-loaded stop (34) whose effort is adjusted by a screw (35) .

7. Fuel control assembly in accordance with either of the claims 5 or 6, characterised in that the sleeve (16) is driven in rotation by a drive system (30) by means of a cylinder (25) fitted so as to rotate within a ring (29) fixed firmly to the casing (10) and transmitting the rotary motion to the sleeve by means of a segment (24) bearing a lug (23) working in conjunction with a notch (22) in an end cap fixed to the sleeve.

8. Fuel control assembly in accordance with claim 7, characterised in that the notch (22) of the end cap is oblong so as to accommodate axial movements of the sleeve in the inner bore of the casing.

9. Fuel control assembly in accordance with either of the claims 7 or 8, characterised in that the slide (50) of the overspeed limiter is driven in longitudinal movement by the rollers (51, 52) pressing against the end of the slide and firmly fixed to the bob weights (53, 54) pivoted on shafts (55, 56) carried on a part firmly fixed to the base of the rotating cylinder (25).

10. Fuel control assembly in accordance with any one of the claims 5 to 9, characterised in that the slide (50) of the overspeed limiter (8) is movable longitudinally until it encounters a spring loaded stop (62) whose effort is adjustable by a screw so as to obtain a predetermined overspeed threshold.

FIG. 1

FIG. 2

FIG. 3

FIG. 4

**FIG. 5**

**FIG. 8**

FIG. 6

FIG. 7